# EUROPÄISCHE PATENTSCHRIFT

(11) **EP 1 047 592 B1**
(45) Veröffentlichungstag und Bekanntmachung des Hinweises auf die Patenterteilung: **18.09.2002**
(21) Anmeldenummer: 98966573.2
(22) Anmeldetag: 22.12.1998
(51) Int. Cl.: B63H 23/24

(54) **ELEKTRISCHE ANTRIEBSEINRICHTUNG FÜR SCHIFFE**
ELECTRICAL DRIVE MECHANISM FOR SHIPS
DISPOSITIF D'ENTRAINEMENT ELECTRIQUE POUR BATEAUX

(30) Priorität: 16.01.1998 DE 19801448
(43) Veröffentlichungstag der Anmeldung: 02.11.2000
(73) Patentinhaber: SIEMENS AKTIENGESELLSCHAFT, 80333 München (DE)
(72) Erfinder: RZADKI, Wolfgang, D-21509 Glinde (DE); MEYER, Christian, D-13591 Berlin (DE); SCHÜRING, Ingo, D-10715 Berlin (DE); HEIN, Peter, D-13629 Berlin (DE)
(86) Internationale Anmeldenummer: DE9803770
(87) Internationale Veröffentlichungsnummer: WO99036312

(56) Entgegenhaltungen:
- EP-A- 0 030 896
- EP-A- 0 790 696
- WO-A-92/06526
- DE-A- 19 519 424
- DE-A- 19 627 323
- US-A- 4 296 346
- US-A- 5 402 461
- ANDERSEN PETER & GRAGEN UWE: "New Type of Permanent field Machines for diesel electric propulsion" SIEMENS-SCHOTTEL-PROPULSOR (SSP) THE PODDED ELECTRIC DRIVE WITH PERMANENTLY EXCITED MOTOR,7. März 1997 (1997-03-07), Seiten A/B, 1-24, XP000198528
- GLOEL J ET AL: "EIN NEUES HOCHEFFIZIENTES ANTRIEBSSYSTEM" SCHIFF UND HAFEN., Bd. 49, Nr. 10, 1. Oktober 1997 (1997-10-01), Seiten 40-42, 44, XP000720093 HAMBURG DE
- PATENT ABSTRACTS OF JAPAN vol. 018, no. 414 (E-1587), 3. August 1994 (1994-08-03) -& JP 06 124757 A (RAILWAY TECHNICAL RES INST), 6. Mai 1994 (1994-05-06)
- PATENT ABSTRACTS OF JAPAN vol. 008, no. 183 (P-296), 23. August 1984 (1984-08-23) & JP 59 075161 A (MITSUBISHI DENKI KK), 27. April 1984 (1984-04-27)
- PATENT ABSTRACTS OF JAPAN vol. 018, no. 102 (E-1511), 18. Februar 1994 (1994-02-18) & JP 05 300724 A (YASKAWA ELECTRIC CORP), 12. November 1993 (1993-11-12)
- PATENT ABSTRACTS OF JAPAN vol. 010, no. 272 (E-437), 16. September 1986 (1986-09-16) & JP 61 094548 A (FANUC LTD), 13. Mai 1986 (1986-05-13)

## Beschreibung

Die Erfindung betrifft eine elektrische Antriebseinrichtung für Schiffe, bestehend aus einem an der Unterseite des Schiffsrumpfes gondelartig angeordneten Gehäuse zur Aufnahme eines Elektromotors mit Läufer und Stator, wobei an der den Läufer tragenden Welle wenigstens ein Propeller angeordnet ist, wobei der elektrische Motor als Synchronmotor ausgebildet ist, und wobei der Läufer Permanentmagnete zur Erregung des Stators aufweist und daß das Gehäuse als Außenwandkühler ausgebildet ist.

Der Erfindung liegt die Aufgabe zugrunde, bei einem elektrischen Schiffsantrieb der eingangs genannten Art eine Magnetanordnung anzugeben, die einen hohen Wirkungsgrad des Antriebs und als Folge einen guten Propulsionswirkungsgrad ergibt.

Aus der DE 196 27 323 A1 ist ein gondelartig anzuordnender elektrischer Schiffsantrieb mit permanent erregtem Läufer bekannt. Dergleichen aus der Druckschrift Siemens-Schottel-Propulsor (SSP), "The Podded Electric Drive with Permanently Excited Motor", 1997, Seiten 1 bis 24, in der in Fig. 8 auch das Prinzip eines derartigen Läufers offenbart ist. Ein Hinweis auf die konstruktive Ausgestaltung eines für einen Schiffsantrieb besonders geeigneten Permanentmagnet-Antrieb läßt sich aus diesem Stand der Technik jedoch nicht entnehmen.

Die Lösung dieser Aufgabenstellung ist erfindungsgemäß dadurch gekennzeichnet, daß die Permanentmagnete als Luftspaltmagnete ausgebildet auf U-förmigen, geblechten oder massiven Jochen angeordnet sind, die auf einem Läuferrohr abschnittsweise aufliegend befestigt sind.

So ergibt sich eine Magnetanordnung, die für einen hohen Wirkungsgrad sorgt und für einen Schiffsantrieb besonders geeignet ist.

Gemäß einer weiteren Ausführungsform der Erfindung sind die Permanentmagnete als Flußkonzentrationsanordnung angeordnet.

Zur Vermeidung von Streufeldern sowie zum Schutz der Permanentmagneten wird weiterhin vorgeschlagen, daß die Permanentmagnete von einem Blechpaket umschlossen angeordnet sind.

Weitere Merkmale und Vorteile der Erfindung ergeben sich aus der nachfolgenden Beschreibung der zugehörigen Zeichnung, in der verschiedene Ausführungsbeispiele einer erfindungsgemäßen elektrischen Antriebseinrichtung für Schiffe beispielhaft schematisch dargestellt sind. In der Zeichnung zeigt:
- Fig. 1: einen Längsschnitt durch eine erfindungsgemäße Antriebseinrichtung mit Luftkühlung der Wickelköpfe des Stators;
- Fig. 2: einen Längsschnitt durch eine erfindungsgemäße Antriebseinrichtung mit Sprühkühlung der Wickelköpfe des Stators;
- Fig. 3: einen Längsschnitt durch eine erfindungsgemäße Antriebseinrichtung, bei der der Stator des Motors mit dem Gehäuse kraftschlüssig durch eine Schrumpfverbindung verbunden ist;
- Fig. 4: eine ausschnittsweise Darstellung einer ersten Ausführungsform zur Anordnung von Permanentmagneten und Joch;
- Fig. 5: eine ausschnittsweise Darstellung einer zweiten Ausführungsform zur Anordnung von Permanentmagneten und Joch und
- Fig. 6: eine ausschnittsweise Darstellung einer dritten Ausführungsform zur Anordnung von Permanentmagneten und Joch.

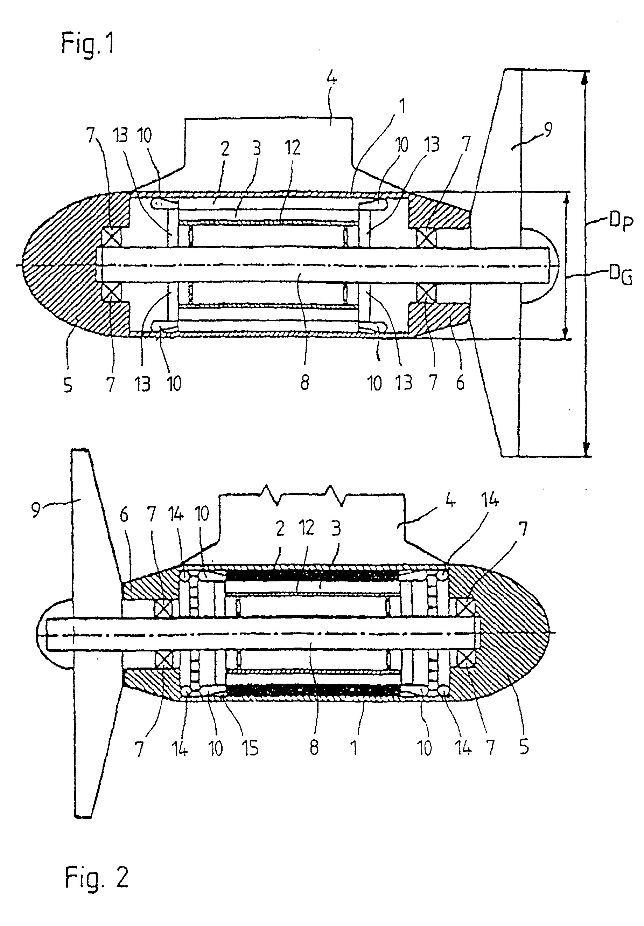

Die Antriebseinrichtungen gemäß den Abbildungen Fig. 1 bis Fig. 3 bestehen aus einem strömungsgünstig gestalteten, die Form einer Gondel aufweisenden Gehäuse 1 mit einem darin angeordneten, aus Stator 2 und Läufer 3 bestehenden Synchronmotor sowie einem Schaft 4, über den die Antriebseinrichtung am Boden eines nicht dargestellten Schiffsrumpfes gondelartig befestigt ist.

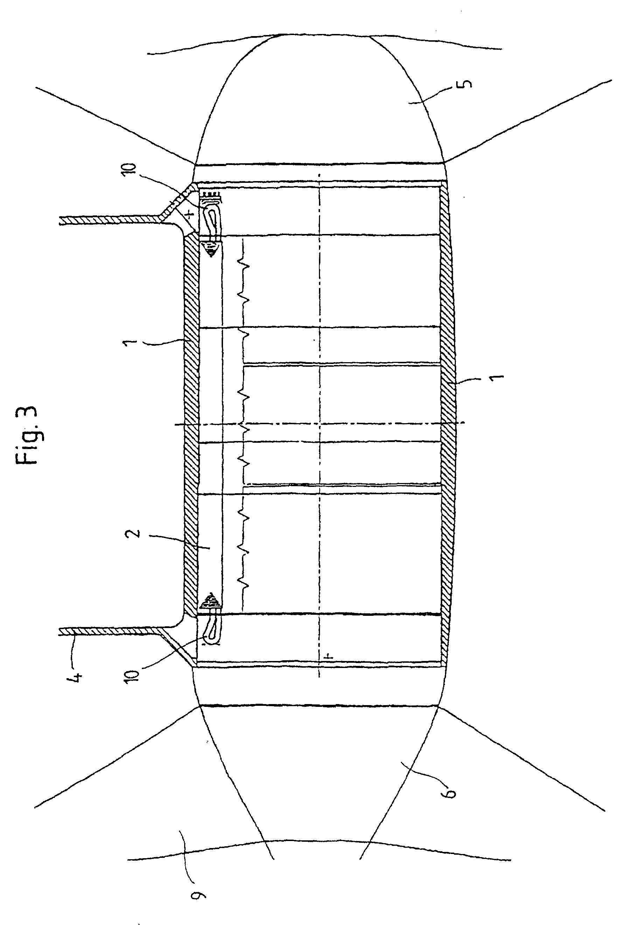

Das Gehäuse 1 weist - wie aus Fig. 1 und Fig. 2 ersichtlich - Endkappen 5 und 6 auf, die Lager 7 einer Antriebswelle 8 tragen. Während bei der Ausführungsform gemäß den Abbildungen Fig. 1 und 2 nur an einem Ende der Antriebswelle 8 ein Propeller 9 angeordnet ist, sind bei der Ausführungsform gemäß Fig. 3 an beiden Enden der Antriebswelle 8 Propeller 9 angeordnet.

Wie insbesondere aus Fig. 3 ersichtlich, ist der Stator 2 des Synchronmotors kraftschlüssig in das hohlzylindrische Gehäuse 1 eingepaßt. Beim dargestellten Ausführungsbeispiel erfolgt diese kraftschlüssige Verbindung durch Aufschrumpfen des Gehäuseteils auf das Blechpaket des Stators 2, wobei aufgrund der Blechpaketlänge der Sitz mehrfach abgestuft ist. Die Wicklungen des Stators 2 sind in den Abbildungen Fig. 1 bis Fig. 3 teilweise anhand der Wickelköpfe 10 dargestellt. Der Läufer 3 des Synchronmotors ist in an sich bekannter Weise als mit Permanentmagneten 11 versehener Läufer 3 ausgebildet und ruht mittels einer Tragkonstruktion 12 auf der Antriebswelle 8.

Die Kühlung des Synchronmotors erfolgt durch die kraftschlüssige und/oder formschlüssige Verbindung zwischen Stator 2 und Gehäuse 1 derart, daß das Gehäuse 1 als Außenwandkühler ausgebildet ist. Die Kühlung des Synchronmotors erfolgt somit durch das das Gehäuse 1 umgebende bzw. umströmende Wasser, ohne daß zusätzliche Kühlmedien durch im Stator 2 oder zwischen Stator 2 und Gehäuse 1 vorgesehene Kühlkanäle geleitet werden müssen, wie dies aus dem Stand der Technik bekannt ist.

Beim Betrieb des Synchronmotors im oberen Leistungsbereich kann es notwendig sein, die Wickelköpfe 10 des Stators 2 einer zusätzlichen Kühlung zu unterziehen. In Fig. 1 ist eine erste Ausführungsform für eine solche zusätzliche Kühleinrichtung zur Kühlung der Wickelköpfe 10 des Stators 2 dargestellt. Bei dieser ersten Ausführungsform ist innerhalb der Wickelköpfe 10, das heißt in radialer Richtung zwischen den Wickelköpfen 10 einer jeden Stirnseite des Stators 2, auf der Antriebswelle 8 jeweils ein Lüfter 13 angeordnet. Mit Hilfe dieser Lüfter 13 wird die im Innenraum des Synchronmotors befindliche Luft konvektiv umgewälzt und umströmt dabei die Wickelköpfe 10. Die von der verwirbelten Luft aufgenommene Wärme wird der Luft über das als Außenwandkühler ausgebildete Gehäuse 1 durch das das Gehäuse 1 umströmende Wasser entzogen.

In Fig. 2 ist eine zweite Ausführungsform zur Ausbildung der zusätzlichen Kühleinrichtung dargestellt. Bei diesem Ausführungsbeispiel ist zur Kühlung der Wickelköpfe 10 des Stators 2 stirnseitig zu den Wickelköpfen 10 jeweils ein im Querschnitt rohrförmiger Ring 14 angeordnet, der in Richtung auf die Wickelköpfe 10 mit Sprühöffnungen versehen ist. Über diese Sprühöffnungen kann Isolieröl versprüht werden, das sich als Öl-Sumpf 15 unterhalb der Antriebswelle 8 befindet und von dort jeweils mittels einer außerhalb des Gehäuses 1 angeordneten Pumpe in den Ring 14 gepumpt wird. Dem in dem Öl-Sumpf 15 befindlichen Isolieröl wird die Wärme ebenfalls über das als Außenwandkühler ausgebildete Gehäuse 1 durch das das Gehäuse 1 umströmende Wasser entzogen. Selbstverständlich ist es auch möglich, beide Kühleinrichtungen zur Kühlung der Wickelköpfe 10 des Stators 2 zu kombinieren, so daß die Kühlung der Wickelköpfe 10 sowohl über die Lüfter 13 als auch über den Ring 14 versprühtes Isolieröl erfolgt. Bei der Ausbildung des Öl-Sumpfes 15 im Gehäuse 1 ist darauf zu achten, daß der Isolierölpegel nicht so weit ansteigt, daß Isolieröl in den Luftspalt zwischen Stator 2 und Läufer 3 des Synchronmotors gelangt, da hierdurch der Wirkungsgrad des Motors erheblich beeinträchtigt würde.

Dadurch, daß der Synchronmotor mit seinem Stator 2 formschlüssig und/oder kraftschlüssig in das strömungsgünstig gestaltete Gehäuse 1 eingefügt ist und der mit den Permanentmagneten 11 versehene Läufer 3 in radialer Richtung weniger Platz beansprucht als ein Kurzschlußläufer, kann das Gehäuse 1 einen relativ kleinen Außendurchmesser D_{G} aufweisen, so daß das Verhältnis zwischen dem Außendurchmesser D_{G} des Gehäuses 1 und dem Außendurchmesser Dₚ des Propellers 9 einen relativ kleinen Wert von beispielsweise 0,35 erreicht, selbst dann, wenn der Synchronmotor für eine Antriebsleistung von bis zu 20 MW und mehr ausgelegt ist.

Diese Ausgestaltung des Gehäuses 1 des elektrischen Schiffsantriebs als Außenwandkühler ist unabhängig davon, ob das gondelartige Gehäuse 1 am Schiffsrumpf starr oder drehbar angeordnet ist. Besonders vorteilhaft zum Manövrieren ist es jedoch, wenn das gondelartige Gehäuse 1 um die Längsachse des Schaftes 4 drehbar ist, so daß dieser Antrieb auch für ruderlose Schiffe geeignet ist.

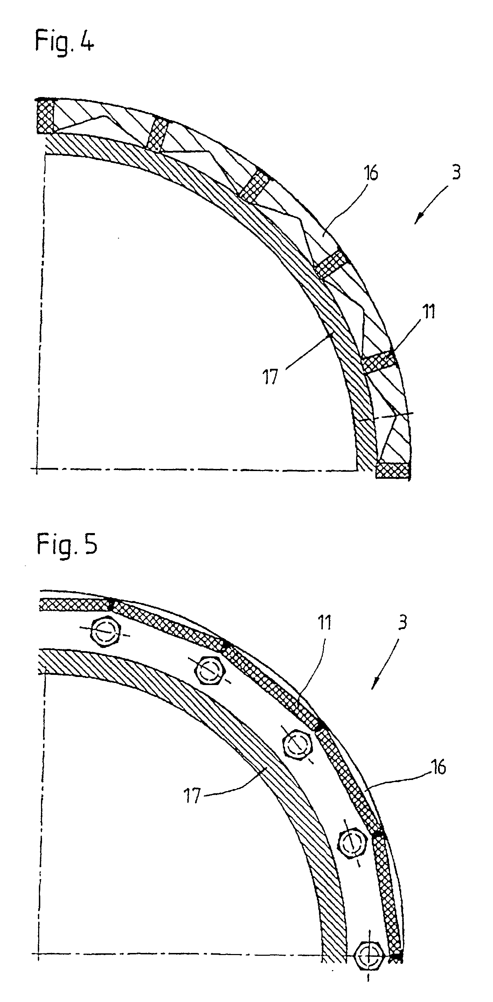

In den Abbildungen Fig. 4, 5 und 6 sind drei Ausführungsformen zur Ausbildung des Läufers 3 dargestellt.

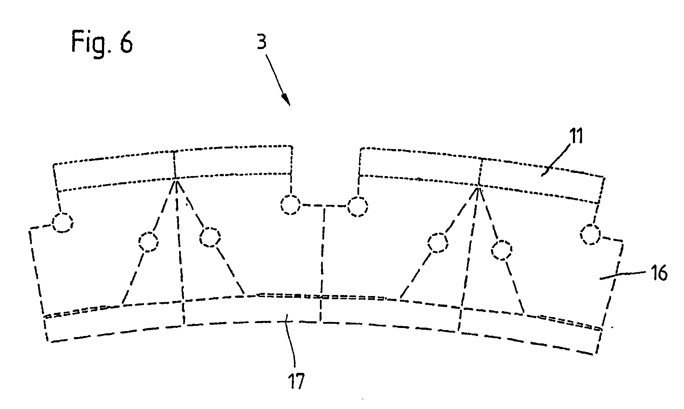

Gemäß Fig. 6 sind die Permanentmagnete 11 als Luftspaltmagnete ausgebildet, die auf einem U-förmigen, geblechten oder massiven Joch 16 angeordnet sind.

Gemäß Fig. 4 sind die auf dem Rotorrohr 17 angeordneten Permanentmagnete 11 als Flußkonzentrationsanordnung angeordnet, wobei die Permanentmagnete 11 zwischen den Jochen 16 angeordnet sind.

Die Ausbildung gemäß Fig. 5 zeigt schließlich eine Anordnung, bei der die Permanentmagnete 11 von dem Blechpaket des Joches 16 umschlossen sind, wodurch Streuungen des Magnetfeldes deutlich verringert werden.

## Patentansprüche

1. Elektrische Antriebseinrichtung für Schiffe, bestehend aus einem an der Unterseite des Schiffsrumpfes gondelartig angeordneten Gehäuse (1) zur Aufnahme eines Elektromotors mit Läufer (3) und Stator (2), wobei an der den Läufer (3) tragenden Welle (8) wenigstens ein Propeller (9) angeordnet ist, wobei der elektrische Motor als Synchronmotor ausgebildet ist, und wobei der Läufer (3) Permanentmagnete (11) zur Erregung des Stators (2) aufweist und daß das Gehäuse (1) als Außenwandkühler ausgebildet ist, **dadurch gekennzeichnet, daß** die Permanentmagnete (11) als Luftspaltmagnete ausgebildet auf U-förmigen, geblechten oder massiven Jochen (16) angeordnet sind, die auf einem Läuferrohr (11,17) abschnittsweise aufliegend befestigt sind.

2. Elektrische Antriebseinrichtung nach Anspruch 1, **dadurch gekennzeichnet, daß** die Permanentmagnete (11) als Flußkonzentrationsanordnung angeordnet sind.

3. Elektrische Antriebseinrichtung nach Anspruch 1 oder 2, **dadurch gekennzeichnet, daß** die Permanentmagnete (11) von einem Blechpaket umschlossen angeordnet sind.

## Claims

1. Electric driving apparatus for ships which consists of a housing (1), which is disposed on the underside of the ship's hull in a pod-like manner, for receiving an electric motor having a rotor (3) and a stator (2), wherein at least one propeller (9) is disposed on the shaft (8) carrying the rotor (3), wherein the electric motor is constructed as a synchronous motor, and wherein the rotor (3) has permanent magnets (11) for exciting the stator (2), and the housing (1) is constructed as an outer-wall cooler, **characterised in that** the permanent magnets (11) are disposed, constructed as air-gap magnets, on U-shaped laminated or solid yokes (16) which are fastened so as to rest, in sections, on a rotor tube (11, 17).

2. Electric driving apparatus according to claim 1, **characterised in that** the permanent magnets (11) are disposed as a flux-concentrating arrangement.

3. Electric driving apparatus according to claim 1 or 2, **characterised in that** the permanent magnets (11) are disposed in a manner enclosed by a bundle of laminations.

## Revendications

1. Dispositif d'entraînement électrique pour bateaux, constitué d'une caisse (1) disposée comme une nacelle contre le dessous de la coque et destinée à loger un moteur électrique avec rotor (3) et stator (2), au moins une hélice (9) étant montée sur un arbre (8) portant le rotor (3), le moteur électrique étant conçu comme un moteur synchrone, le rotor (3) comportant des aimants permanents (11) pour l'excitation du stator (2) et la caisse (1) étant conçue comme un refroidisseur de paroi extérieure, **caractérisé par le fait que** les aimants permanents (11) conçus comme des aimants à entrefer sont disposés sur des culasses (16) en forme de U, feuilletées ou pleines qui sont fixées de manière à être posées par tronçons sur un tube de rotor (11, 17).

2. Dispositif d'entraînement électrique selon la revendication 1, **caractérisé par le fait que** les aimants permanents (11) sont montés comme un dispositif à concentration de flux.

3. Dispositif d'entraînement électrique selon la revendication 1 ou 2, **caractérisé par le fait que** les aimants permanents (11) sont montés entourés par un paquet de tôles.
